# EUROPEAN PATENT APPLICATION

(11) **EP 1 265 454 A1**
(43) Date of publication of application: **11.12.2002**
(21) Application number: 01112986.3
(22) Date of filing: 08.06.2001
(51) Int. Cl.: H04Q 11/04

(54) **Monitoring device and method**

(71) Applicant: TELEFONAKTIEBOLAGET L M ERICSSON (publ), 126 25 Stockholm (SE)
(72) Inventor: Mordacci, Alessandro, 149-43 Nynäshamn (SE); Björnson, Stefan, 149-45 Nynäshamn (SE)
(74) Representative: HOFFMANN - EITLE

(57) **Abstract**

To provide a general and effective monitoring equipment for an ATM communication network, it is proposed to provide an interception unit (16) to store an identification of at least one communication connection to be monitored. Further, a selection unit (20) is adapted to achieve a coupling to the communication connection to be monitored according to the information stored in the interception table and to further to select at least one cell from this communication connection. A copying unit (22) copies the at least one cell selected by the selecting unit (20) to a monitoring connection. The device for monitoring the communication connection is further integrated into a switching equipment (12; DCS) of a packet-switched communication network.

## Description

### FIELD OF INVENTION

The present invention relates to a monitoring device and a related method, and in particular to a device and method for monitoring at least one communication connection in a packet switched network.

### BACKGROUND ART

The ever increasing amount of data traffic in packet switched networks leads to a demand for monitoring of this data traffic with the same level of security and confidentiality as known from circuit switched networks monitoring. In circuit switched networks, e.g., telephoning networks, it is customary to monitor communication connections from a remote operation center so that a network operator wishing to operate real time traffic can constantly receive information on the quality of the communication lines. Another application of monitoring is lawful interception, i.e. the act of intercepting a communication on behalf of a law enforcement agency and also referred to as legal interception in the following. Here, data communicated via the communication lines is copied for subsequent use, e.g., in court proceedings.

From the above, it is only natural that network operators will want to continue such monitoring approaches in packet switched networks, e.g., the ATM-based or IP-based networks. However, currently the monitoring of communication connections in packet switched networks is accomplished on an ad hoc basis. All the solutions currently available are based on stand-alone, dedicated and independent devices external to the switch equipment of the communication networks. Typical examples are protocol analyzers, cable "sniffers", and similar devices that are used to collect data from communication connections. The collected data is then directly analyzed and/or registered on a media like a tape or disc being directly connected to the monitoring device.

In particular for a lawful interception the storage media is sent to the law enforcement agency that requested the legal interception. Therefore, the procedure to set up such a lawful interception is lengthy and many people are involved. Confidentiality of the collected data is hard to achieve and the authenticity of information is also difficult to prove at court.

One approach to the monitoring of communication connections for shared media networks is described in WO 98/33303. It is proposed to have a copy of all traffic in a selected branch of the communication network forwarded to a special test branch. This copy is achieved at the link layer according to the ISO/OSI level 2 so that some special purpose equipment is necessary to monitor a communication connection at the physical layer according to the ISO/OSI level 1. Further, the approach described in WO 98/33303 is restricted to a specific case where all the data traffic from a specific local area network is monitored and where it is not possible to isolate data traffic between network layer endpoints. Still further, every bridge connecting two or more networks and operating at the data link layer of the OSI/ISO reference model or a switch connecting two or more networks and operating at the network layer of the OSI/ISO reference model in the path between the monitored network and the monitoring equipment must be adapted to have monitoring capability. Yet another disadvantage is that there is no way to take the quality of service QoS into account. E.g., if the monitored communication connection uses a best effort QoS class, there may occur the situation that some data reaches its destination endpoint but not the monitoring equipment.

### SUMMARY OF INVENTION

In view of the above, the object of the present invention is to provide a general and effective monitoring equipment for an ATM communication network.

According to the present invention, this object is achieved through a device for monitoring at least one communication connection in an ATM packet switched communication network, comprising and interception unit adapted to store an identification of the at least one communication connection to be monitored; a selection unit adapted to achieve a coupling to the communication connection to be monitored according to the information stored in the interception table, and to select at least one cell from this communication connection; a copying unit adapted to copy the at least one cell selected by the selecting unit to a monitoring connection; wherein the device for monitoring a communication connection is integrated into a switching equipment of the packet switched communication network.

Therefore, according to the present invention, the interception unit allows to isolate data traffic on a communication connection so that only a part of the data traffic on the communication connection to be monitored may be forwarded to the monitoring device. Typically, this will be cells relevant to endpoints, while data related to the operation and management of the ATM communication network will not be monitored.

Further, the operation of the selection unit and copying unit as outlined above allows for a concurrent real time processing of cells forwarded to an endpoint and at the same time to the monitoring device. A consequence is the preservation of the characteristics of the data flow both to the endpoint and also to the monitoring device through transparent copying.

Yet another decisive advantage of the inventive monitoring device and method is the integration into switching equipment of the ATM packet switched communication network.

Therefore, the same administrative and technical procedures used in the ATM communication network may also be used to monitor a communication process. This allows for a lawful intercept at the same level of confidentiality for the monitored information that is provided by the ATM communication network for the original communication and therefore to fulfill monitoring requirements.

Also, the monitoring device according to the present invention is independent on the content of the cells on the communication connection to be monitored and therefore does not require an adaptation for every kind of network termination and type of traffic. In other words, the monitoring device may be used for any kind of different services, e.g., ATM data, IP over ATM, and/or telephony over ATM.

According to a preferred embodiment of the present invention, the monitoring device further comprises a terminating unit adapted to terminate monitoring connections at the switching equipment.

Therefore, as the monitoring connection is appropriately terminated at the monitoring device, it will under no circumstances be visible to the user that a monitoring occurs. The reason for this is that due to the provision of the terminating unit, no ATM cells will travel in the backward direction from the monitoring device to reach the monitored user. Therefore, the fact that a connection is monitored will not be visible to any functional block except the monitoring device itself and the functional block that activated the monitoring process. Due to the provision of the terminating unit it is also impossible to use operation and maintenance functions to query the state of the monitoring device.

According to yet another preferred embodiment of the present invention, there is provided an activation unit initiating the activation of the monitoring mechanism according to the present invention.

The only data that needs to be provided by the activation unit are two connection identifiers, i.e. information identifying the monitored and the monitoring connection. According to the present invention, connection identifiers specify the physical port, the virtual circuit identifier and the virtual path identifier according to the ATM standard both for the monitored flow and for the monitoring flow.

According to yet another preferred embodiment of the present invention, the selection unit is adapted to process cell header information of cells, e.g., on the communication connection to be monitored.

Therefore, according to the present invention, the selection unit and subsequent parts of the monitoring device, e.g., the copying unit, are embodied to differentiate between specific parts of selected ATM cells, e.g., payload and header data. While payload data will be copied in a transparent manner, header data may be copied either unchanged in a transparent manner or after modification thereof. In particular, if ATM cells are discarded downstream a switch, the destination endpoint may usually request a retransmission of the discarded ATM cells. However, this is not possible for the monitoring connection as there is no means to request a retransmission for missing ATM cells which would reveal the monitoring process to the end user.

In other words, according to the present invention it is proposed to eventually use different QoS parameters for the monitored connection and the monitoring connection. One example to achieve this feature in the framework of the ATM standard is that the monitoring device ensures that ATM cells of the monitoring connections always have the so-called cell loss priority CLP bit reset to zero.

Yet another important advantage of the differentiation between payload and header data according to the present invention is that it possible to distinguish between data traffic to be forwarded to the end user and so-called operation and management or maintenance data which also should not be copied during the monitoring process to avoid revealing of the monitoring not only to an end user, but also to the network operating and maintenance system parts.

According to yet another preferred embodiment of the present invention, the selection unit in the monitoring device is adapted to process cell header information at least comprising a virtual path identifier VPI and to select the related ATM communication connection to be monitored accordingly.

Therefore, according to this preferred embodiment, all virtual circuits covered by the specified virtual path identifier may be monitored through transparent copying of the related cell payload.

According to yet another preferred embodiment of the inventive monitoring device, there is further provided a buffer unit adapted to store cells selected from a communication connection to be monitored for subsequent copying to the monitoring connection.

Therefore, according to this preferred embodiment of the present invention, cells are still processed in real time. Nevertheless, the provision of the buffering unit allows to delay the analysis of the cells or in other words, to specify a low loss but high delay profile for the monitoring connection. This allows to achieve a better use of the network and at the same time not risking a loss of information. The reason for the better network utilization is that in modern multi-service networks a certain quantity of capacity is reserved for each customer/service. However, the customer/service may try to use more bandwidth, as soon as it is available. In other cases the network is explicitly over-committed on the assumption that not all of the customers will use the maximum available bandwidth at the same time. Further, it is also possible to give different priorities to different customers/types of services. All of this means that the traffic flow is not constant, but varies around an average value. When the monitoring connection uses a low loss, high delay setting the ATM switch can queue the monitoring cells in a buffer and transmit them a little bit later. In this way the variations in bandwidth utilization are reduced and the network throughput will be nearer the theoretical maximum, whereby the better network utilization may be achieved and short-term network load fluctuations are smoothed out. Preferably, when congestion lasts more than the buffer capacity may handle, the ATM switch will start throwing away lower priority ATM cells.

While the basic principles of the present invention as outlined above are uni-directional, the present invention also applies to a bi-directional monitoring. In this case the related mechanisms are applied in both directions separately.

According to another preferred embodiment of the present invention there is provided a computer program product directly loadable into internal memory of a packet switched communication network switch and comprising software code portions for performing the steps according to the inventive method when the product is run on a processor of the switch.

Therefore, the present invention is also provided to achieve an implementation of the inventive method steps on computer or processor systems. In conclusion, such implementation leads to the provision of computer program products for use with a computer system or more specifically a processor comprised in, e.g., a switch in an ATM communication network.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or telephone networks and/or Internet via modems or other interface devices. It should be understood that such media, when carrying processor readable instructions implementing the inventive concept represent alternate embodiments of the present invention.

### DESCRIPTION OF DRAWING

The best mode of carrying out the present invention as well as preferred embodiments thereof will be described in the following with reference to the drawing in which
- Fig. 1: shows the basic principle underlying the best mode of carrying out the present invention and related preferred embodiments thereof;
- Fig. 2: shows a schematic diagram illustrating the use of the monitoring device according to the present invention together with an ATM core switch matrix;
- Fig. 3: shows a schematic diagram illustrating the interception unit to be used in the monitoring device according to the present invention;
- Fig. 4: shows a flow chart illustrating the monitoring method according to the present invention;
- Fig. 5: shows a schematic diagram illustrating the operation of a digital cross connect system;
- Fig. 6: shows a schematic diagram illustrating the use of the monitoring device according to the present invention at the input stage of the digital cross connect system shown in Fig. 6;
- Fig. 7: shows a schematic diagram illustrating the use of the monitoring device according to the present invention at the output stage of the digital cross connect system shown in Fig. 6; and
- Fig. 8: shows a schematic diagram illustrating the use of the monitoring device according to the present invention, both at the input stage and the output stage of the digital cross connect system shown in Fig. 6.

### DESCRIPTION OF PREFERRED EMBODIMENTS

In the following, the best mode of carrying out the present invention as well as preferred embodiments thereof, further objects and further advantages will be explained with respect to the drawings. Insofar as different features of the present invention are explained with respect to certain aspects thereof, it is to be understood that these features are combinable with each other to achieve various other modifications and variations of the present invention.

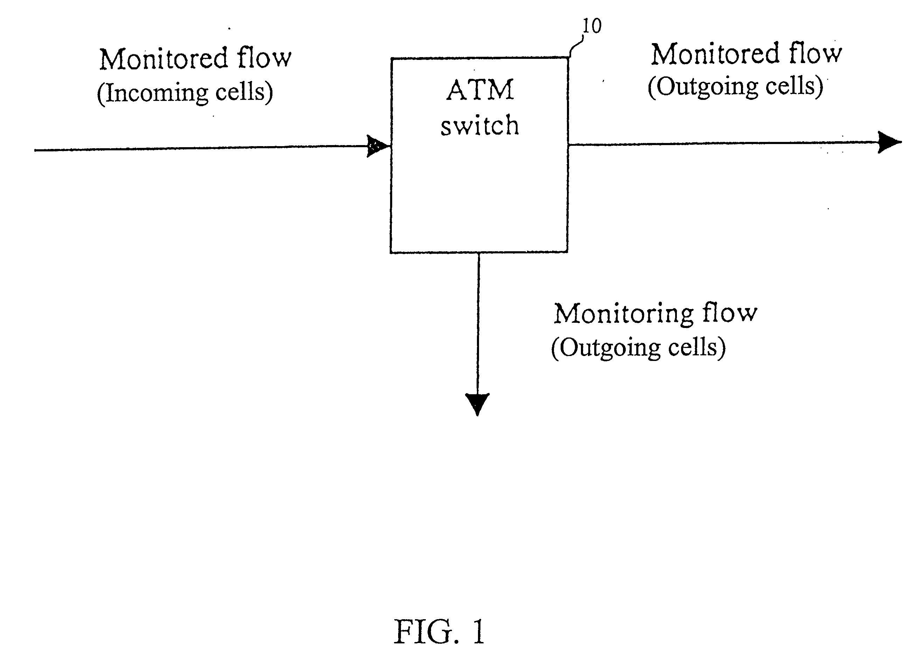

Fig. 1 shows the basic principle underlying the best mode of carrying out the present invention and the related preferred embodiments.

As shown in Fig. 1, according to the present invention, the monitoring mechanism for the monitoring of a flow of ATM cells, also referred to as ATM data packets in the following, is integrated into an ATM switch. As will be outlined in more detail in the following, the monitoring device may be associated to the core switch matrix of the ATM switch 10 or also to a digital cross connect used in the ATM switch 10.

The integration of the monitoring device into the ATM switch 10 itself allows to use the same administrative and technical procedures used in the ATM communication network also for the monitoring of a communication connection, e.g., during transfer of a call or the exchange of data. As outlined above, this allows for a same level of confidentiality of the monitored information as provided by the network for the monitored communication process. Also, the integration of the monitoring device into the ATM switch 10 allows to isolate specific data traffic handled by the ATM switch and to consider quality of service QoS aspects during monitoring, since related information is well available in the ATM switch 10.

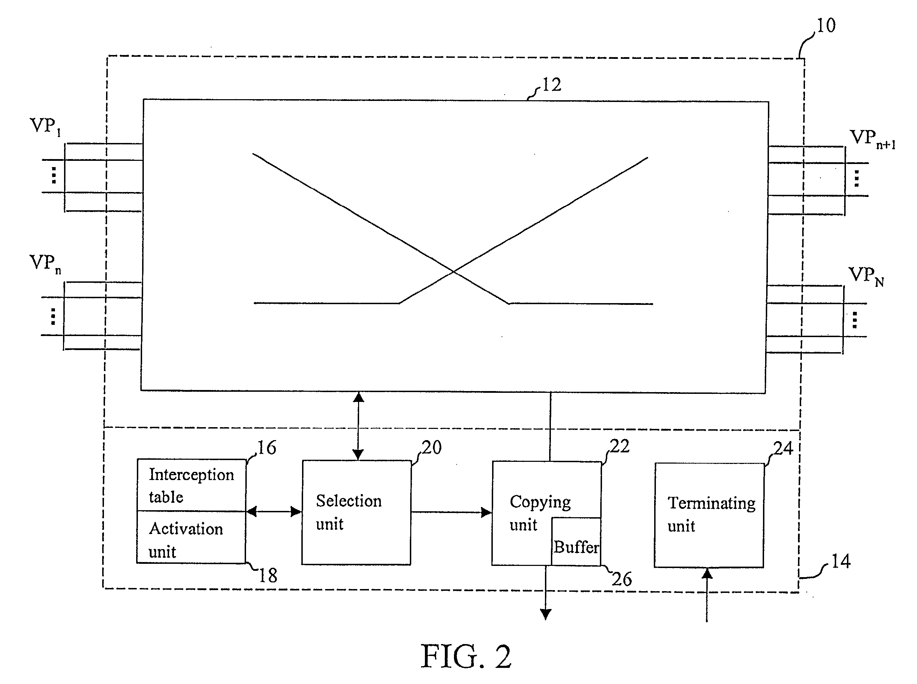

Fig. 2 shows a schematic diagram illustrating the use of the monitoring device according to the present invention together with an ATM core switch matrix.

As shown in Fig. 2, the ATM switch 10 divides into the core switch matrix 12 and the monitoring device 14. The core switch matrix 12 is adapted to map a plurality of virtual paths VP₁, ..., VPₙ at the input side to a plurality of virtual paths VPₙ₊₁, ..., VP_{N} at the output side. Further each virtual path may divide into a plurality of virtual circuits VCI.

In particular, the operation of the core switch matrix 12 insofar as the present invention is concerned may be summarized in view of the following table:

| ATM field description | | ATM switch | |
|---|---|---|---|
| | | Incoming cells | Outgoing cells |
| VPI | Virtual path ID | Used to switch cell | May be replaced with new VPI, VCI value |
| VCI | Virtual circuit ID | | |
| PTI | Payload type indicator | See following table | Transparent copy |
| CLP | Cell loss priority | Discard the cell first, if set | Transparent copy |
| HEC | Header error control | Discard the cell if there exists an error and correction is not possible | Calculated according to ATM specifications |
| | Payload | Ignored | Transparent copy |

As outlined above, each ATM cell comprises a header part and a payload part. The header part divides into a virtual path ID VPI, a virtual circuit ID VCI, a payload type indicator PTI, a cell loss priority CLP and a header error control.

Operatively, the ATM core switch matrix uses the virtual path ID and the virtual circuit ID to switch incoming ATM cells to outgoing virtual paths.

Further, the cell loss priority CLP bit marks cells that may be discarded in case there is congestion in the ATM network. At the network access point NAP it is checked that the user complies with his own contract and does not send more cells he is allowed to. However, the network access point NAP can choose to allow the user to send more cells as long as there is free capacity in the ATM network. As this may not be known in advance, the network access point NAP marks a certain number of cells putting the CLP bit on. In case any ATM switch experiences a congestion, the first step is to discard the cells having the CLP bit set. Further, the CLP bit may also be set by the user to explicitly point out what are the best candidates to be discarded. Discarded ATM cells may then be retransmitted for subsequent forwarding to the end user.

Further, the header error control HEC will be used for error correction according to ATM specifications.

Of particular interest for the present invention is the payload type indicator PTI that may be defined as follows:

| PTI bits | | | Type of cell | Cell destination |
|---|---|---|---|---|
| Bit2 | Bit1 | Bit0 | | |
| 0 | 0 | 0 | User data, SDU=0, no congestion | Outgoing connection |
| 0 | 0 | 1 | User data, SDU=1, no congestion | Outgoing connection |
| 0 | 1 | 0 | User data, SDU=0, congestion | Outgoing connection |
| 0 | 1 | 1 | User data, SDU=1, congestion | Outgoing connection |
| 1 | 0 | 0 | Segment O&M cell | Switch O&M function (if end of segment) or outgoing connection |
| 1 | 0 | 1 | End-to-end O&M cell | Switch O&M function (if end system or administrative boundary) or outgoing connection |
| 1 | 1 | 0 | Reserved for future functions | Should never occur |
| 1 | 1 | 1 | | |

In the above table, SDU stands for service data unit and is related to a bit of information that is transparently transported end-to-end by the ATM communication network. At the end system, the service data unit SDU is passed onto a higher layer of the protocol stack. Usually, the segmentation and reassembly sub-layer SAR of the ATM adaptation layer AAL will use the SDU information bit to mark the last ATM cell of a SAR protocol data unit PDU. Because the SDU information bit is an essence end system information, it must be copied into the monitored cell.

Further, different cells may either be related to user data, to operation and maintenance cells being related to a segment of an ATM connection, an operation and maintenance ATM cell being related to an end-to-end connection or be of the type that is reserved for future applications which therefore never occur. ATM cells of the user data type may be further classified in those with no congestion and those with congestion. This classification allows for a feedback mechanism, where the overloaded party sets the congestion indicating the cell it is transmitting. When cells with the congestion indication will be received at the remote party, the remote party will know of the congestion status and will slow down its own transmission rate.

Further, the segment related operation and maintenance cells are either forwarded to the operation and maintenance function of the ATM switch or to an outgoing connection. End-to-end operation and maintenance cells are forwarded to the operation and maintenance function of the ATM switch, if the ATM switch is the end system or constitutes an administrative boundary or again to an outgoing connection.

As shown in Fig. 2, the monitoring device according to the present invention cooperating with the core switch matrix described so far divides into an interception table 16 being triggered by an activation unit 18, further a selection unit 20, a copying unit 22 and a terminating unit 24.

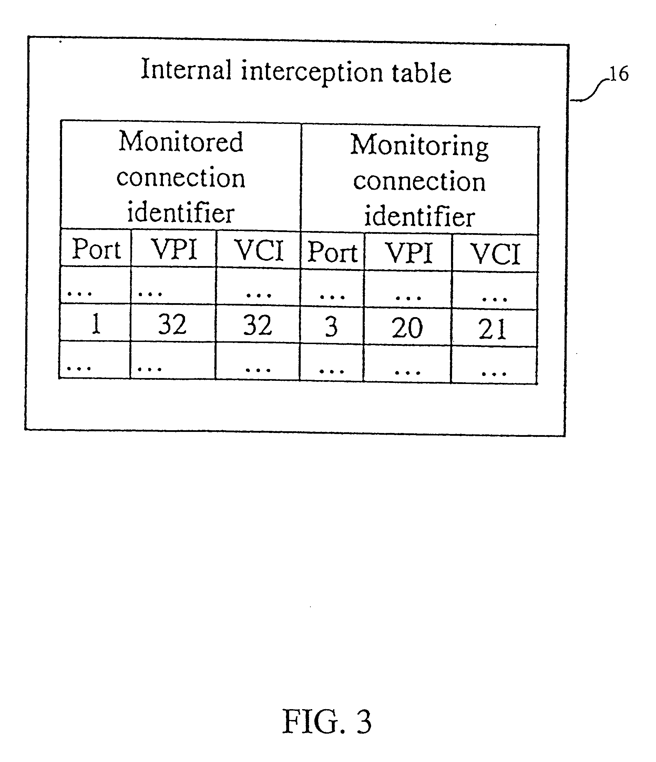

Operatively, the interception table stores an identification of the at least one communication connection to be connected. As shown in Fig. 3, the interception will store a relation between monitored ATM connections and monitoring ATM connections using connection identifiers comprising a physical port of the ATM switch 10 (not shown), the virtual path identifier VPI and the virtual circuit identifier VCI. This data necessary to set up the inventive monitoring mechanism will be provided by the activation unit 18.

Further, the selection unit 20 shown in Fig. 2 is adapted to achieve a coupling to the communication connection to be monitored according to the information stored in the interception table 16 and to select at least one cell from this communication connection in compliance with the type of the cell communicated via the communication connection to be monitored.

Therefore, the operation of the selection unit 20 allows to identify communication connections to be monitored using the virtual path ID and the virtual circuit ID and further to select cells forwarded over the communication connection according to the payload type indicator as summarized in the following table:

| ATM field Description | | Monitoring device | |
|---|---|---|---|
| | | Incoming cells on monitored connection | Outgoing cells on monitoring connection |
| VPI | Virtual path ID | Monitored connection? | May be replaced with new VPI, VCI value |
| VCI | Virtual circuit ID | | |
| PTI | Payload type indicator | Will cell be monitored? (see following table) | |
| CLP | Cell loss priority | Ignored | Always zero |
| HEC | Header error control | Either ignored or processed normally | Calculated according to ATM specifications |
| | Payload | Ignored | Transparent copy |

As can also be seen from the above table, subsequent to the selection of a cell it will then be processed in the copying unit 22.

In the copying unit 22 the cell loss priority CLP defining the behaviour in case of disregarding of a cell will be reset to zero, so that in case a selected cell travels through a congested ATM switch, it will be discarded first. The monitoring device 14 also comprises a terminating unit 24 adapted to terminate monitoring connections at the switching equipment so that data will never be transferred via the monitoring connection and the ATM switch into the ATM communication network. Further, in the copying unit 22 the header error control is either ignored or processed normally and calculated according to ATM specifications. Still further, the copying unit 22 is adapted to provide a transparent copy of the payload of a selected ATM cell to the monitoring connection.

As is also shown in Fig. 2, the copying unit 22 may be extended by a buffering mechanism. Fig. 2 shows a buffer unit 26 within the copying unit 22. However, it should be noted that the specific way to implement such a buffer is not of particular relevance to the present invention as long as a buffering of cells going out from the copying unit 22 to the monitoring connection is achieved, e.g., using available memory capacity in the ATM switch 10. In case the buffer mechanism is initiated, the monitoring may be achieved with a low loss but high delay profile on the monitoring connection so that the operator obtains a better use of the network and at the same time does not risk a loss of information.

A more detailed explanation how a differentiation between those cells that may be monitored and those that may not be monitored using the packet type indication data comprised in the cell is summarized in the following table:

| PTI bits before monitoring | | | Monitorable ATM cell? | PTI bits after monitoring | | |
|---|---|---|---|---|---|---|
| Bit2 | Bit1 | Bit0 | | Bit2 | Bit1 | Bit0 |
| 0 | 0 | 0 | Yes | 0 | 0 | 0 |
| 0 | 0 | 1 | | 0 | 0 | 1 |
| 0 | 1 | 0 | | 0 | 0 | 0 |
| 0 | 1 | 1 | | 0 | 0 | 1 |
| 1 | 0 | 0 | No | - | | |
| 1 | 0 | 1 | End-to-end O&M cells | 1 | 0 | 1 |
| 1 | 1 | 0 | No, reserved values that should never occur | - | | |
| 1 | 1 | 1 | | - | | |

As can be seen from the above table, cells having a packet type indicator bit pattern according to the first four rows, may be forwarded to the monitoring connection by the copying unit 22. As can be seen from the shaded bits in lines 3 and 4, those bits being related to discarding of a cell will always be set to zero to avoid a revealing of the monitoring process.

Further, cells having a PTI bit pattern of (1, 0, 0) may not be copied. The reason for this is that cells having this PTI bit pattern are segment management cells being only meaningful within the network. End systems cannot exchange segment management O&M cells among themselves. Besides, as copied, they would confuse the segment O&M function at the next ATM switch.

Still further, cells having a packet type indication of (1, 0, 1) are related to end-to-end operating and maintenance cells. In some communication networks they may be used to transport end user information and therefore may also be monitored. Otherwise, the communication network will use them. In the latter case they should not be monitored because they could cause interference with the operating and maintenance cells introduced by the management of the monitoring connection.

The further packet type indication PTI bit patterns according to the last two rows should never occur as they are reserved for future applications.

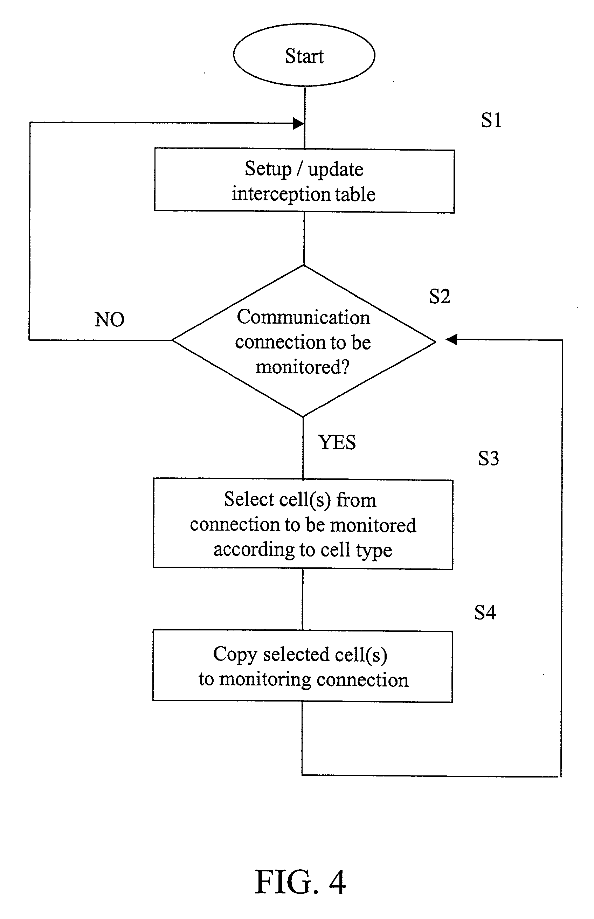

In the following, an operation of the monitoring device will be summarized in view of the flow chart shown in Fig. 4.

As shown in Fig. 4, initially the interception table shown in Fig. 3 is set up for subsequent evaluation whether a communication connection is to be monitored in step S2. If this is not the case, the procedure may branch back, e.g., to update the interception table for further communication connections to be monitored and subsequent repetition of the interrogation step S2.

As shown in Fig. 4, in the affirmative case of step S2, cells are selected from the connection to be monitored according to the cell type, as explained above, in step S3. Then, a copy of the selected cells is forwarded to the monitoring connection in step S4 before the procedure goes back to step S2 to detect further monitoring requests. Here, either the monitoring of an already selected communication connection may be continued through selection of further cells or the monitoring could be switched to a different communication connection to be monitored. Further, while Fig. 4 shows a feedback from step S4 to step S2, alternatively the procedure may as well branch to step S1 according to the present invention.

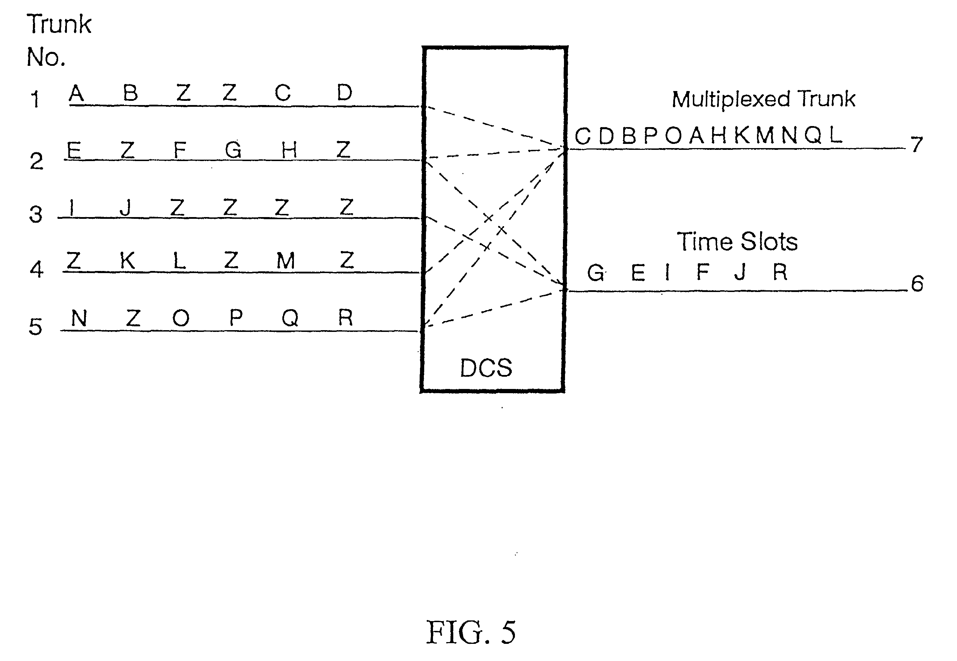

In the following the application of the present invention to a digital cross connect system will be explained with respect to Figs. 5 to 8. Heretofore, first a short review of the function of a digital cross connect system will be given first with respect to Fig. 5.

As shown in Fig. 5, a digital cross connect system manipulates digital input signals, but does not handle signaling messages or perform call processing. In Fig. 5, the letters A, B, C, ..., R denote specific communication channels, and Z designates idle time slots. One function of the system shown in Fig. 5 is called cross connection and relates to the redirection of channels from one facility interface to another. A further function is related to the rearrangement of time slots (also referred to as grooming), and the placement of multiple lower speed signals onto a higher speed trunk is referred to as multiplexing. The removal of idle time slots is referred to as concentration and allows to improve the use of available communication capacity.

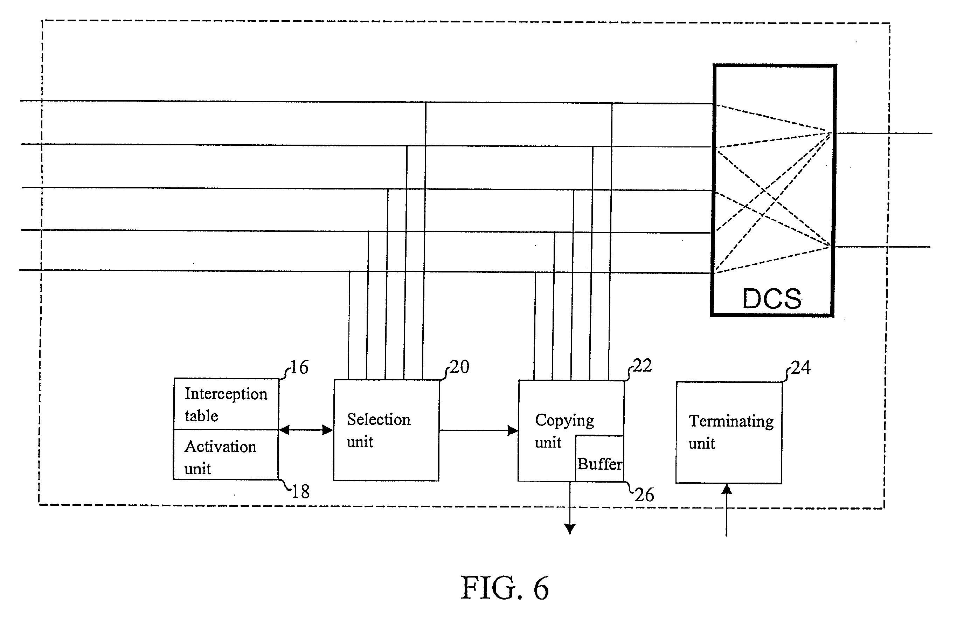

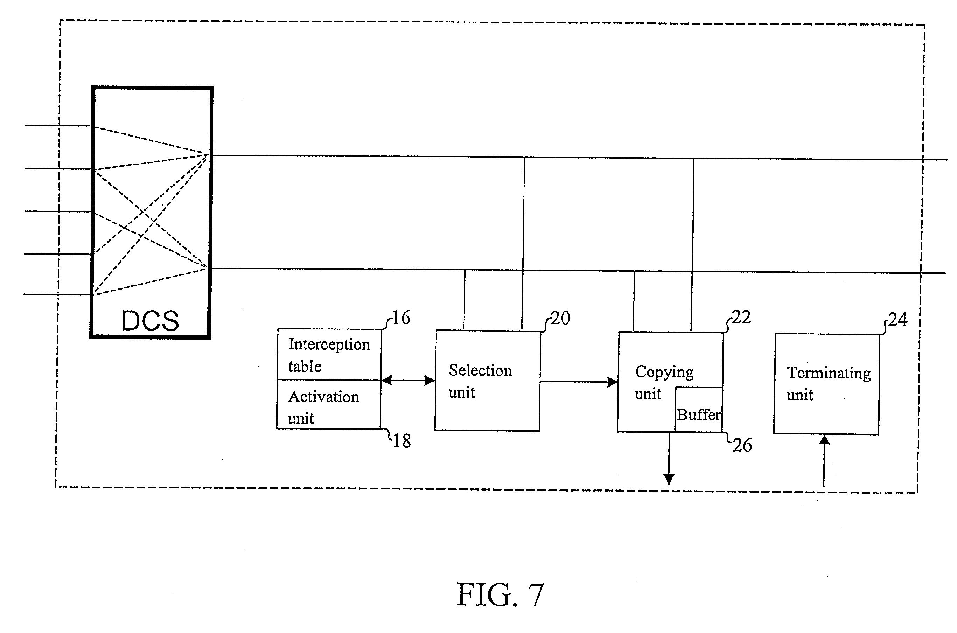

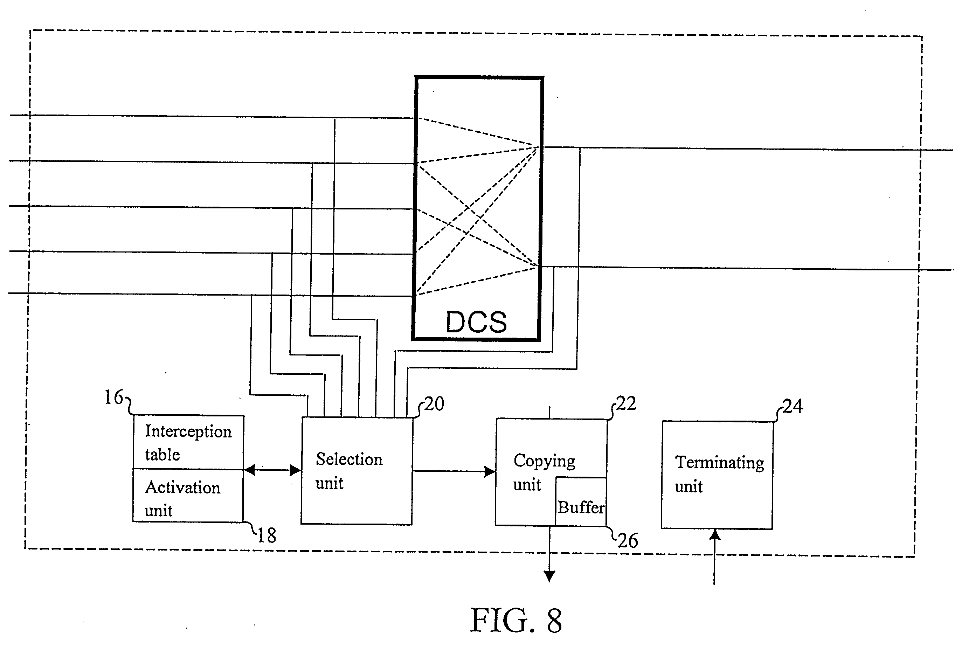

Contrary to the arrangement in Fig.2, where the inventive monitoring device is operated in combination with a core switching matrix, the monitoring device may as well be operated in corporation with the digital cross connect system as shown in Figs. 6 to 8. Typically, the monitoring device may be assigned to the input stage of the digital cross connect system as shown in Fig. 6, at the output stage of the digital cross connect system as shown in Fig. 7, or both at the input stage and the output stage of the digital cross connect system as shown in Fig. 8. Heretofore, the selection unit 20 is connected to the different input/output lines of the digital cross connect system to detect communication connections to be monitored. Further, after triggering through the selection unit in case of identification of a communication connection to be monitored, the copying unit 22 will copy related cells from the input/output lines of the digital cross connect system. As shown in Figs. 6 to 8, also in this preferred embodiment of the present invention, the buffering mechanism outlined above with respect to Fig. 2 is applicable. The same applies to the termination of the monitoring connection at the terminating unit 24.

While in the above, the present invention has been described with reference to drawings and figures of the best mode and preferred embodiments of the invention, it should be noted that clearly the present invention may be implemented using variations and modifications thereof which will apparent and can be readily made by those skilled in the art without departing from the scope and spirit of the present invention. Typically, the functionalities described above may be realized in software, in hardware, or a combination thereof.

Accordingly, it is not intended that the scope of claims appended hereto is limited to the description as set forth herein, but rather that the claims should be construed so as to encompass all features of the present invention as described above, including all features that would be treated as equivalent thereof by those skilled in the art to which the present invention pertains.

## Claims

1. Device for monitoring at least one communication connection in an ATM packet switched communication network, comprising:
an interception unit (16) adapted to store an identification of the at least one communication connection to be monitored;
a selection unit (20) adapted to achieve a coupling to the communication connection to be monitored according to the information stored in the interception table, and to select at least one cell from this communication connection;
a copying unit (22) adapted to copy the at least one cell selected by the selecting unit (20) to a monitoring connection; wherein
the device for monitoring a communication connection is integrated into a switching equipment (12; DCS) of the packet switched communication network.

2. Device according to claim 1, ***characterized in that*** it is associated to a core switch matrix (12) provided in the switching equipment.

3. Device according to claim 1, ***characterized in that*** it is associated to a digital cross-connect system (DCS) provided in the switching equipment.

4. Device according to one of the claims 1 to 3, ***characterized in that*** it further comprises a terminating unit (24) adapted to terminate monitoring connections at the switching equipment (10).

5. Device according to one of the claims 1 to 4, ***characterized in that*** it further comprises an activation unit (18) adapted to initiate the monitoring of communication connections.

6. Device according to one of the claims 1 to 5, ***characterized in that*** the selection unit (20) is adapted to process cell header information of cells.

7. Device according to claim 6, ***characterized in that*** the selection unit (20) is adapted
to process cell header information at least comprising a virtual circuit identifier (VCI) and
to select related ATM communication connections to be monitored.

8. Device according to claim 7, ***characterized in that*** the selection unit (20) is further adapted
to process cell header information comprising a virtual path identifier (VPI) and
to select related ATM communication connections to be monitored.

9. Device according to claim 7 or 8, ***characterized in that*** the selection unit (20) is further adapted to select cells in communication connections to be monitored according to a cell type indication (PTI).

10. Device according to one of the claims 1 to 9, ***characterized in that*** the copying unit (22) is adapted to achieve transparent copying of cell payload.

11. Device according to claim 10, ***characterized in that*** the copying unit (22) is further adapted to copy communication control related data of selected cells transparently or after modification thereof.

12. Device according to one of the claims 1 to 11, ***characterized in that*** it further comprises a buffer unit (26) adapted to store selected cells before copying to the monitoring connection.

13. Method of monitoring at least one communication connection in an ATM packet switched communication network, comprising the steps:
storing an identification of the at least one communication connection to be monitored in an interception table (16);
achieving a coupling to the communication connection to be monitored for subsequent monitoring according to the information stored in the interception table (16);
selecting at least one cell from the communication connection to be monitored according to the cell type;
copying the selected at least one cell to a monitoring connection; wherein
the method of monitoring is executed in a switching equipment (10) of the ATM packet switched communication network.

14. Method according to claim 13, ***characterized in that*** it further comprises a step of terminating monitoring connections at the switching equipment (10).

15. Method according to claim 13 or 14, ***characterized in that*** the at least one communication connection to be monitored is selected through processing of cell header information.

16. Method according to claim 15, ***characterized in that*** it comprises the steps
processing cell related header information at least comprising a virtual circuit identifier (VCI) and
selecting related ATM communication connections to be monitored.

17. Method according to claim 16, ***characterized in that*** it further comprises the steps
processing cell related header information comprising a virtual path identifier (VPI) and
to select related ATM communication connections to be monitored.

18. Method according to claim 16 or 17, ***characterized in that*** it further comprises the step of selecting cells in communication connections to be monitored according to a cell type indication (PTI).

19. Method according to one of the claims 13 to 18, ***characterized in that*** it further comprises the step for achieving a transparent copy of cell payload.

20. Method according to one of the claims 13 to 19, ***characterized in that*** it further comprises a step to copy communication control related data of selected cells transparently or after modification thereof.

21. Method according to one of the claims 13 to 20, ***characterized in that*** it further comprises a step to buffer selected cells before copying these cells to the monitoring connection.

22. Computer program product directly loadable into the internal memory of a packet switched communication network switch, comprising software code portions for performing the steps of one of the claims 13 to 21, when the product is run on a processor of switch.
